# EUROPÄISCHE PATENTSCHRIFT

(11) **EP 2 742 907 B1**
(45) Veröffentlichungstag und Bekanntmachung des Hinweises auf die Patenterteilung: **20.12.2017**
(21) Anmeldenummer: 13189179.8
(22) Anmeldetag: 17.10.2013
(51) Int. Cl.: A61C 13/00, A61C 13/01

(54) **Prothese sowie Verfahren zur Herstellung einer Prothese**
Prosthesis and method for manufacturing a prosthesis
Prothèse et procédé de fabrication d'une prothèse

(30) Priorität: 17.12.2012 EP 12197441
(43) Veröffentlichungstag der Anmeldung: 18.06.2014
(73) Patentinhaber: Ivoclar Vivadent AG, 9494 Schaan (LI)
(72) Erfinder: Baaske, Thomas, 8885 Mols (CH); Hagenbuch, Konrad, 9469 Haag (CH); Frei, Christian, 39025 Naturns (IT); Heinz, Markus, 39025 Naturns (IT); Watzke, Ronny, 6800 Feldkirch (AT)
(74) Vertreter: Splanemann

(56) Entgegenhaltungen:
- WO-A1-2012/155161
- WO-A2-2012/061652
- US-A1- 2012 276 502

## Beschreibung

Die Erfindung betrifft eine Prothese, gemäß dem Oberbegriff von Anspruch 1, sowie ein Verfahren zur Herstellung einer Prothese, gemäß dem Oberbegriff von Anspruch 12.

Seit langer Zeit, nämlich seit mehreren Jahrzehnten, werden Prothesen als Teil- und/oder Vollprothesen dergestalt hergestellt, dass in einem das Zahnfleisch des Patienten simulierenden Materials künstliche Zähne eingebettet werden, die die natürlichen Zähne ersetzen sollen.

Um etwaige Beschwerden der Patienten zumindest zu reduzieren, ist man bestrebt, die Position der Zähne auch gnathologisch zu optimieren. Hierzu wird nach Abformung der Mundsituation des Patienten und Einsatz eines Positivmodells in einem Artikulator die translatorische und rotatorische Lage des betreffenden Zahns überprüft und gegebenenfalls nachgebessert, beispielsweise durch okklusales bzw. inzisales Beschleifen des Zahns, bevor die Zähne in Wachs aufgestellt sind.

Es sind zahlreiche Verfahren bekannt geworden, die Position des jeweiligen Zahns zur Prothesenbasis einzustellen und festzulegen. Beispielsweise sei in sofern auf die DE 16 16 125 verwiesen. Als weiteres Beispiel für derartige Verfahren aus den 80er Jahren sei die Lösung gemäß der US 4,299,573 genannt.

In den nächsten Jahrzehnten sind verschiedene Verfahren bekannt geworden, die Herstellung der Prothese per CAD/CAM zu realisieren, und auch die Zahnstellung entsprechend festzulegen.

Als Basis für die Herstellung einer Prothese ist es seit einiger Zeit bekannt, einen Rohling aus Polymethylmethacrylat (PMMA) zu verwenden, wie es beispielsweise in der DE 20 2006 006 286 U1 beschrieben ist. Bei dieser Lösung soll ein Großrohling zur Erzeugung der Prothesenbasis fleischfarben eingefärbt sein, und die Prothese für einen Kiefer kann aus einem Stück gefertigt sein. Die Größe des betreffenden Rohlings ist so gewählt, dass auch die Realisierung einer Vollprothese, also mit sämtlichen Zähnen eines Kiefers, möglich ist.

Diese Lösung ist besonders für die maschinelle Bearbeitung im Rahmen eines CAD/CAM-Verfahrens vorteilhaft, da ein derartiger Rohling in einer Fräsmaschine gut bearbeitbar ist. Jedoch erfordert diese Lösung es, nach Fertigstellung der Prothesenbasis für die individuelle Anpassung an den Patienten die Zähne entsprechend in Wachs aufzustellen. Dies kompliziert den gesamten Herstellvorgang.

Aus der Druckschrift WO 2012/155161 A1 ist ein Prothesenzahnträger mit zumindest einem Prothesenzahn sowie ein Verfahren zur Herstellung des Prothesenzahnträgers bekannt. Aus dem Prothesenzehnträger werden durch CAD/CAM-Verfahren Prothesenzähne - im Wesentlichen durch Herausfräsen - für das nachfolgende Einsetzen bzw. Einbetten in eine Prothesenbasis erstellt. Die exakte Länge dieser derart erstellten Zähne wird mühilfe dar CAD-Software in Abhängigkeit der individuellen Abmaße der benötigten Prothesenbasis bereits im Vorfeld bestimmt. Es ist mit dem dortigen Verfahren nicht möglich, nicht vorkonfektionierte Prothesenzähne zur verwenden.

Die Druckschrift US 2012/0276502 A1 beschreibt mithilfe digitaler Verfahren erstellte künstliche Zähne, welche in einer um diese Zähne gegossenen Basis aufgenommen werden sollen. Es wird dort erwähnt, die Wurzeln dieser künstlichen Zähne ggf. zu modifizieren. Jedoch sind dazu unter anderem ein zusätzliches Haltungselement zur Haltung der Zähne und ein Verfahren zur Herstellung dieses Haltungselements erforderlich

Dementsprechend sind weitere Versuche unternommen worden, den Hersteilvorgang besser an die maschinelle Umsetzung anzupassen. So ist gemäß der WO 2012/061652 A2 ein CAD/CAM-Verfahren bekannt geworden, das anatomische Marken oder Markierungen des Patienten digital erfassen und verwenden möchte. Dies können beispielsweise bestimmte Punkte des Oberkiefers, die Kondylenachse oder dergleichen sein. Es ist jedoch schwierig, und im Grunde derzeit nach dem derzeitigen Kenntnisstand nicht möglich, unmittelbar hieraus beispielsweise auf die Okklusionsebene zu schließen, um die Zähne so aufzustellen, dass eine gnathologisch optimierte Kaubewegung möglich ist. Daher muss auch bei diesem Verfahren eine nachträgliche Anpassung der einzelnen Zähne erfolgen, so dass die an sich beabsichtigte Arbeitsersparnis zumindest bei zahntechnisch befriedigendem Ergebnis nicht mehr möglich ist.

Es sind auch zahlreiche weitere Verfahren zur Optimierung von CAD/CAM-Verfahren für die Prothesenherstellung vorgeschlagen worden. So soll bei einer vorgeschlagenen Lösung die Prothesenbasis zweiteilig ausgestaltet werden, und zwar mit einem ersten, standartisierten Teil, und einem zweiten, der ein flexibles Aufstellen der Zähne ermöglichen soll. Ohne entsprechenden Aufwand ist hierbei aber auch insbesondere die optimierte Höhenlage der Zähne je bezogen auf den Antagonisten und dessen Nachbarszähne nicht möglich.

Demgegenüber liegt der Erfindung die Aufgabe zu Grunde, eine Prothese, gemäß dem Oberbegriff von Anspruch 1 bzw. ein Verfahren zur Herstellung einer Prothese, gemäß dem Oberbegriff von Anspruch 12 zu schaffen, die es erlaubt, die Zähne einer Teil- oder Vollprothese trotz computergesteuert maschineller Bearbeitung in einer optimierten Weise aufzustellen.

Diese Aufgabe wird durch die Ansprüche 1 bzw, 12 gelöst. Vorteilhafte Weiterbildungen ergeben sich aus den Unteransprüchen.

Erfindungsgemäß besonders günstig ist es, dass durch die Möglichkeit, die konfektionierten Zähne basal zu beschleifen oder abzufräsen, also in geeigneter Weise spanabhebend zu bearbeiten, die Höhenlage freibleibend realisiert werden kann. Es können bewusst etwas längere konfektionierte Zähne verwendet werden, die dann eine bessere Verankerung in der Prothese erlauben. Die bei der Mastikation auftretenden Kräfte umfassen neben Vertikalkräften vor allem auch Horizontalkräfte. Während die Vertikalkräfte durch die konische Ausgestaltung der Kavitäten der in der Prothesenbasis in der Regel gut aufgenommen werden können, beanspruchen die Horizontalkräfte die Verbindung zwischen Prothesenbasis und Zähnen auf Scherung, was die Klebefuge beansprucht. Durch eine entsprechende Verlängerung der Zahnwurzel in der Prothesenbasis ist sichergestellt, dass der Lastarm der Hebelwirkung der horizontalen Kaufkräfte so lang wie möglich ist.

Durch die optional mögliche Verwendung einer Transferschablone für das Aufstellen der Zähne lässt sich rasch und mit guter Genauigkeit die Position der aufzustellenden Zähne in der jeweiligen Kavität festlegen, basierend auf den von der CAD-Software angestrebten Zielposition, entsprechend welcher die Kavität ausgestaltet ist.

Erfindungsgemäß ist es daher möglich, eine manuelle Zwischenbearbeitung der Zähne, nach welcher die Aufnahme in die betreffende Kavität ohnehin problematisch ist, zu vermeiden.

Während die Prothesenbasis typischerweise aus fleischfarbenem Kunststoffmaterial realisiert ist, können für die Zähne entweder solche auf Acrylbasis oder Komposit-Zähne verwendet werden. Diese lassen sich typischerweise mit den gleichen Fräsern bearbeiten, mit welcher die basale Seite der Prothesenbasis bearbeitet wird, ohne dass es zu einem erhöhten Fräserverschleiss kommt.

Erfindungsgemäß ist es aber auch nicht ausgeschlossen, Keramikzähne, beispielsweise solche aus Feldspat, zu verwenden. Auch diese lassen sich basal beschleifen, bei Überstand gegenüber der patientenindividuellen Kieferngegebenheit, gegebenenfalls nach Fräserwechsel, der bei den typischen Fräsmaschinen automatisch vorgenommen werden kann.

Als Kleber können beliebige geeignete Klebstoffe verwendet werden, beispielsweise solche ebenfalls auf Acrylbasis, Zweikomponentenkleber oder warmhärtbare Kleber.

Alternativ kann auch eine andere Art der Befestigung des Zahns bzw. der Zähne in der Prothese erfindungsgemäß eingesetzt werden. So lassen sich die Zähne auch einpolymerisieren, durch eine Einrastbefestigung einrasten, einschrauben nach der Art von Implantaten, einklemmen oder in einer beliebigen anderen geeigneten Weise mechanisch oder mit chemischen Hilfsmitteln befestigen.

Erfindungsgemäß ist es besonders günstig, dass auch bei beengten Platzverhältnissen im Mund des Patienten eine sowohl ästhetisch als auch zahntechnisch voll befriedigende Prothese realisierbar ist.

In vorteilhafter Ausgestaltung lassen sich auch okklusale bzw. inzisale dynamische Störkontakte durch Abschleifen oder Abfräsen nach Fertigstellung der Prothese im Übrigen beseitigen. Hierzu ist es besonders günstig, wenn eine fünfachsige Fräsmaschine eingesetzt wird. Die okklusalen und inzisalen Fehlkontakte werden bevorzugt abgeschliffen, nachdem die Zähne eingeklebt sind, also bevor die Basalseite der Prothesenbasis spanabhebend bearbeitet wird, oder auch hieran anschließend.

Erfindungsgemäß ist es günstig, wenn für die Realisierung der erfindungsgemäßen Prothese zunächst Abformungen vom Mund des Patienten vorgenommen werden, beispielsweise mit einem an sich bekannten Abformlöffel. Ein Satz von Standard-Frontzähnen - oder gegebenenfalls auch Molaren - wird an dem Abformlöffel befestigt und in geeigneter Weise eine registrierte Bissstellung realisiert. Diese so erzeugte, der natürlichen Bissstellung entsprechende Position der Zähne wird nun in geeigneter Weise dreidimensional erfasst, durch entsprechende Scanvorgänge. Die so erfassten Höhenlagedaten dienen in Kombination mit den bekannten Abmessungen der konvektionierten Zähne der Bereitstellung von Daten für die Ausgestaltung der Kavitäten in der Prothesenbasis, für die Festlegung der Winkel- und Höhenlage der jeweiligen Zähne.

Hierbei wird die gingivale Passung der Zähne zum oberen Maximum hin optimiert, so dass eine möglichst gute Verankerung der Zahnbasis in der Kavität in der Prothesenbasis möglich ist.

Erfindungsgemäß besonders günstig ist es, wenn die Zähne, nachdem sie in die Prothesenbasis, also in die dortige Kavität, eingesetzt sind, falls notwendig dergestalt gekürzt werden, die Prothesen-Basalfläche mit der Zahn-Basalfläche bündig ist. Hierdurch ist eine patientenindividuelle Anspassung an die Kiefergegebenheiten möglich, ohne dass Reizungen des zahnfreien Kiefers an dieser Stelle entstehen würden.

Bei Bedarf lässt sich die Zahnbasalfläche auch mit einer Schutzschicht abdecken, beispielsweise ebenfalls auf Acrylbasis, wobei die Schutzschicht bei Bedarf auch fleischfarben eingefärbt sein kann, oder auch elastisch ausgestaltet sein kann. Die Schutzschicht kann eine recht geringe Stärke aufweisen, beispielsweise zwischen 5 *µ*m und 100 *µ*m.

Erfindungsgemäß ist es günstig, dass die in den Zahn eingeleiteten Scherkräfte von der maximalen vertikalen Länge der zervikalen Umfangsfläche des Zahns aufgenommen werden können. Gerade bei beengten Raumverhältnissen kann so eine optimale Abstützung der konfektionierten Zähne realisiert werden.

In weiterer modifizierter Ausgestaltung ist es auch möglich, an den Stellen, an denen eine Zahnbasalfläche die Prothesen-Basalfläche durchtritt und dementsprechend abzuschleifen ist oder abzufräsen ist, das Abfräsen über die bündige Erstreckung hinaus erfolgt. Bei dieser Alternative wird die Zahnbasalfläche um weniges, beispielsweise 500 *µ*m, stärker gekürzt, als es für den bündigen Abschluss erforderlich ist. Die so entstehende Vertiefung wird dann mit Prothesenbasis-Material zur Erzeugung des bündigen Abschlusses wieder befüllt.

Wenn sich - wie dies gerade bei recht langen konfektionierten Zähnen möglich ist - Störkontakte in der Okklusionsstellung einstellen, oder aber Störkontakte, die durch eine simulierte Kiefergelenkbewegung entstehen, können diese ebenfalls bevorzugt in der gleichen Fräsmaschine - oder gegebenenfalls auch manuell - durch okklusale bzw. inzisale Bearbeitung der Zähne beseitigt werden. Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: Eine schematische Ansicht des viruellen Schnitts durch eine erfindungsgemäße Prothese, unter Darstellung der Prothesenbasis und des konfektionierten Zahns in ihrer Durchdringung, jedoch ohne Bearbeitung;
- Fig. 2: Die Prothesenbasis gemäß Fig. 1 nach Herstellung der Kavität;
- Fig. 3: Die Prothesenbasis gemäß Fig. 1 mit eingesetztem konfektionierten Zahn;
- Fig. 4: Die Prothese gemäß Fig. 1 nach erfindungsgemäßem basalen Bearbeiten des Zahns;
- Fig. 5: Eine erfindungsgemäße Prothese in einer modifizierten Ausgestaltung unter Darstellung der Prothesenbasis und virtueller Einblendung von Molaren an den Zielstellungen in der Prothesenbasis, entsprechend Fig. 1;
- Fig. 6: Die Prothesenbasis gemäß Fig. 5 nach Erstellung der Kavitäten für die konfektionierten Molaren;
- Fig. 7: Die Prothesenbasis gemäß Fig. 5 mit eingesetzten konfektionierten Molaren;
- Fig. 8: Die Prothesenbasis gemäß Fig. 5 nach dem basalen Bearbeiten der Molaren an der Prothesenbasis; und
- Fig. 9: Eine basale Ansicht einer Prothese, unter Darstellung der basal vorragenden Eckzähnen.

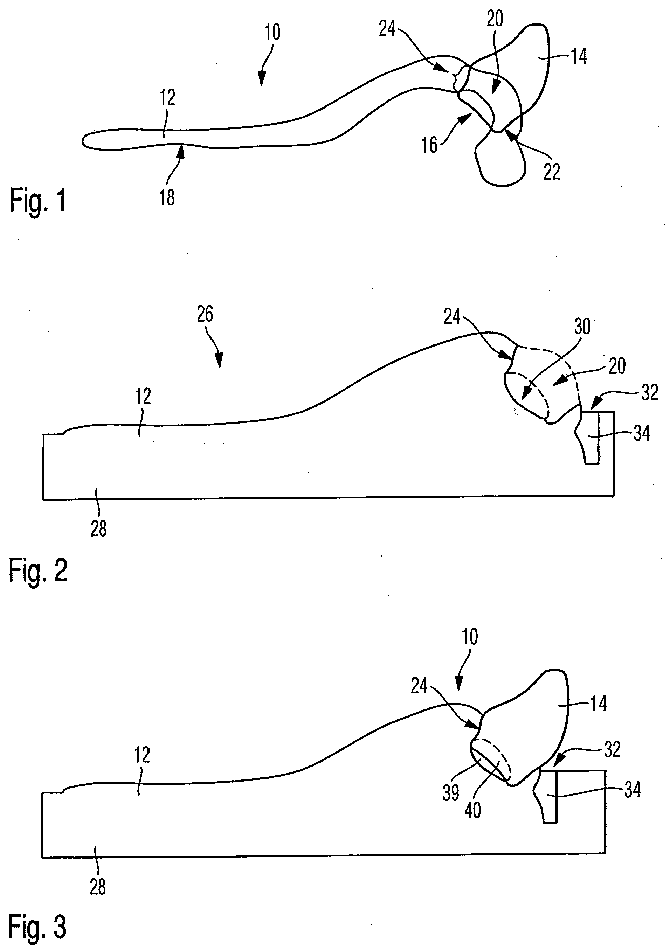

Die in Fig. 1 dargestellte Prothese 10 weist eine Prothesenbasis 12 und eine Vielzahl von Zähnen auf, von denen ein Zahn 14 in Fig. 1 dargestellt ist, und zwar ein Frontzahn.

Wie aus Fig. 1 ersichtlich ist, erstreckt sich eine Basalfläche 16 des Zahns 14 nach unten über eine Basalfläche 18 der Prothesenbasis 12 hinaus. Dies ist dadurch bedingt, dass die Höhenlage des Zahns 14 entsprechend den okkludalen Gegebenheiten im Mund des Patienten angepasst werden muss. Der Überstand der Basalfläche 16 gegenüber der Basalfläche 18 würde jedoch zu einer anatomischen Unverträglichkeit im Kiefer des Patienten führen. Um dies zu verhindern, wurde bislang der Zahn 14 basal gravierend eingekürzt, so dass sich die Basalfläche 18 mit einer Wandstärke von beispielsweise einem Milimeter unterhalb der Basalfläche 16 erstreckte.

Bei den Überlegungen für die Bereitstellung der entsprechenden Kavität 20 war man vor der Erfindung davon ausgegangen, dass insbesondere auch Vertikalkräfte von der Prothesenbasis unterhalb der Basalfläche 16 aufgefangen werden müssen, worunter man Kräfte normal zur Basalfläche 16 verstand.

Erfindungsgemäß ist es demgegenüber vorgesehen, dass diese Kräfte teilweise vom Kiefer des Patienten aufgefangen werden, der sich unterhalb der Basalfläche 18 erstreckt von der im Querschnitt V-förmigen Aufnahmefläche 22 der Prothesenbasis 12. Tatsächlich vertikal eingeleitete Kräfte werden dort gut aufgefangen und abgestützt, wobei es sich versteht, dass der Zahn 14 rund um die Kavität 20 vollständig vom Material der Prothesenbasis 12 umgeben ist. Die Materialstärke reicht jedenfalls aus, um die Zugkräfte aufzunehmen, die auf die Prothesenbasis 12 an der Stelle der V-förmigen Aufnahmefläche 22 eingeleitet werden.

Erfindungsgemäß steht die vollständige Höhe der Seitenflächen 24 für die Aufnahme und Ableitungen von Scherkräften zur Verfügung. Gerade bei Molaren, aber teilweise auch bei Frontzähnen, entstehen durch die Kauschlaufe recht große Seitenkräfte, die sich über die Hebelwirkung an der Spitze des betreffenden Zahns 14 durch den Zahn 14 fortpflanzen und von der Prothesenbasis 12 abgestützt und aufgefangen werden müssen.

Erfindungsgemäß ist es günstig, dass gerade bei beengten Kieferverhältnissen die volle Höhe der Prothesenbasis 12 für die Absützung dieser Scherkräfte zur Verfügung steht, so dass der sich aus den Hebelgesetzen ergebende Lastarm maximiert ist, was gerade auch bei einer relativ dünnen Ausgestaltung einer Prothesenbasis 12 relevant ist.

Aus Fig. 2 ist nun ersichtlich, in welcher Weise die Kavität 20 für die Aufnahme des Zahns 14 in die Prothesenbasis 12 eingebracht wird. Hier sind mit gestrichelten Linien die entfernten Bereiche der Prothesenbasis 12 angedeutet. Die Bearbeitung erfolgt spanabhebend von der Oberseite der Prothesenbasis 12, also von der Okklusalseite her.

Wie ersichtlich ist, ist die Prothesenbasis 12 zunächst nach der Art einer Scheibe 28 ausgebildet, in einer der DE 20 2006 006 286 U1 entsprechenden Weise. Die Bearbeitung erfolgt zunächst vollständig von der Oberseite 26, und die Kavität 20 wird im Bereich der Seitenflächen 24 exakt bearbeitet, während die Kavitätenbasis 30 großzügig entfernt wird, um jedenfalls die Aufnahme des Zahns 14 in die Kavität 20 gemäß Fig. 3 nicht zu beeinträchtigen.

Wie es sich aus dem Vergleich der Figuren 2 und 3 ergibt, ist ein großzügiger Überschuss-Aufnahmeraum 39 vorgesehen, in welchem Klebstoffüberschüsse aufgenommen werden können. Im Bereich der Kavitätenbasis 30 ist insofern die Materialentfernung in größerem Umfang vorgesehen, als es von den Gegebenheiten der Zahn-Basalfläche 16 her erforderlich wäre.

Wie ersichtlich ist, wird seitlich/unterhalb der Kavität 20 eine Vertiefung 32 ausgebildet, die dafür bestimmt ist, ein leichteres Lösen der späteren Prothese 10 aus der Scheibe 28 im Übrigen zu ermöglichen. Es verbleibt jedoch ein Steg 34, der die Prothesenbasis 12 bis zum Ende des Fräsvorgangs mit der Scheibe 28 im Übrigen verbindet.

Aus Fig. 3 ist ersichtlich, in welcher Weise der Zahn 14 in die Kavität 20 eingesetzt wird. Vor dem Einsetzen werden die Seitenflächen 24 mit einem entsprechenden Klebstoff versehen und/oder die zervikale Außenseite des Zahns 14.

Die weitere Bearbeitung erfolgt, nachdem der Klebstoff ausgehärtet ist, beispielsweise durch Wärmeunterstützung oder bei durch die entsprechende chemische Reaktion bei einem nach der Art von Sekundenkleber aufgeklebten Kleber oder einem Zweikomponentenkleber.

Sobald die Aushärtung ein ausreichendem Maße stattgefunden hat, erfolgt eine Bearbeitung der Prothesenbasis 12 von der Basalseite. Hierzu wird zunächst die Basalseite 18 der Prothesenbasis 12 in der erwünschten Weise in Anpassung an die Kieferanatomie gefräst. Hierzu gehört auch die Entfernung von basalen Bereichen des Zahns 14, so dass die Basalseite 16b des Zahns 14 nunmehr anatomisch geformt ist und gegenüber der Basalseite 16 des konfektionierten Zahns gemäß Fig. 1 deutlich zurück springt.

Wie ersichtlich ist, sind die Seitenflächen 24 der Kavität 20 von dieser Bearbeitung nicht betroffen und halten den Zahn sicher, insbesondere im Bereich der V-förmigen Aufnahmefläche 22.

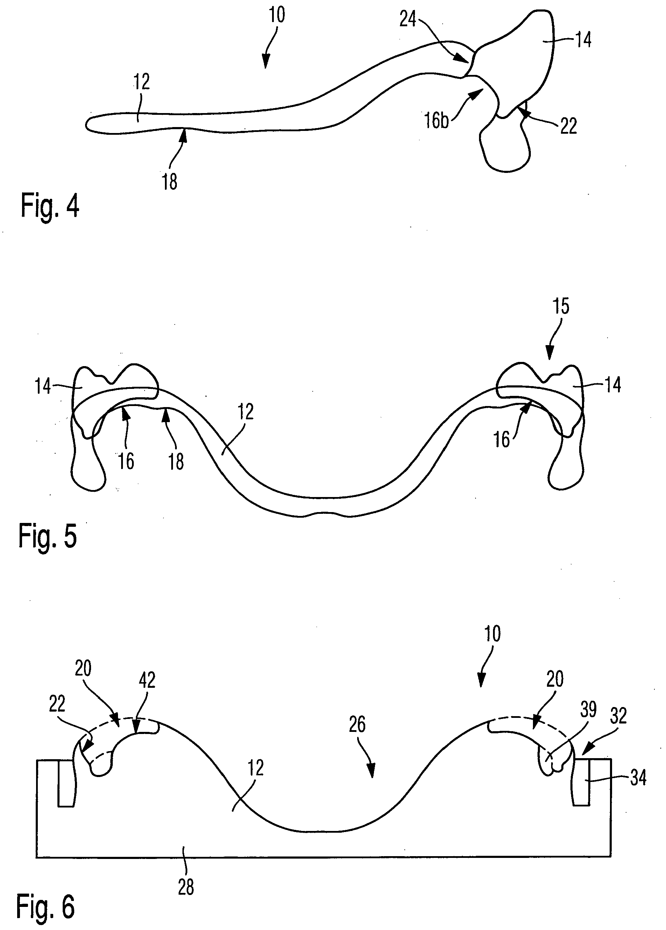

Wie aus Fig. 4 ersichtlich ist, wird dann auch der Steg 34 im letzten Schritt gelöst, so dass die Prothese 10 in fertiger Form vorliegt, wie es in Fig. 4 dargestellt ist.

Ein den Figuren 1 bis 4 entsprechendes Verfahren, jedoch für den Bereich von Molaren, ist aus den Figuren 5 bis 8 ersichtlich. Gleiche Bezugszeichen entsprechen hier den gleichen bzw. entsprechenden Teilen.

Wie aus Fig. 5 ersichtlich ist, sind Zähne 14, die hier als Molare ausgebildet sind, an Stellen zu positionieren, die die Prothesenbasis 12 durchdringen, also gegenüber der Unterseite der Prothesenbasis 12, der dortigen Basalseite, vorspringen.

Das Vorspringen ist jedoch nicht im gesamten Bereich der Basalseite 16 des jeweiligen Zahns 14 vorgesehen, sondern nur in einem Teilbereich der Basalseite. Dieser vorspringende Bereich 40a jedes Molaren 14 wird nun erfindungsgemäß gehandhabt.

In Fig. 5 bis Fig. 7 ist der an der Oberseite 26 fertiggestellte Zustand der Prothese 10 dargestellt; in dem dargestellten Ausführungsbeispielen wird die Prothese 10 zunächst an der Oberseite 26 fertiggestellt, bevor die Prothesen-Basalfläche 18 realisiert wird. In den Figuren 2, 3, 5 und 7 dargestellten insofern halbfertigen Zustand ist die Prothese 10 ausgesprochen stabil und gut zu bearbeiten.

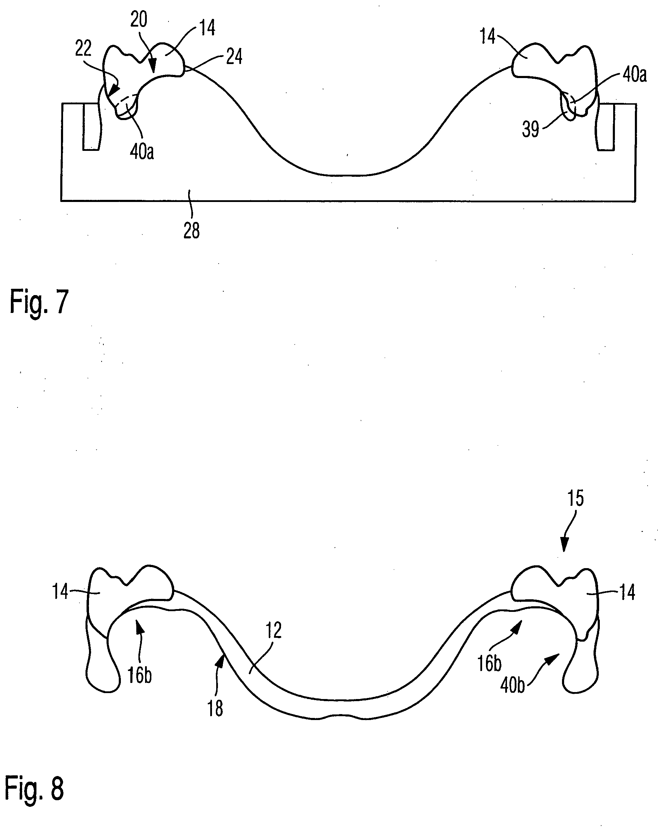

Wie aus Fig. 6 ersichtlich ist, wird zunächst die Mastikalseite 15 der Prothesenbasis 12 in der erwünschten Weise gefräst. Es werden Kavitäten 20 für die Aufnahme der Molaren 14 erstellt. Im Bereich des vorspringenden Bereichs 40a wird ausreichend Material weggefräst, um sicher zu stellen, dass es dort nicht zu einem Auftreffen zwischen dem konfektionierten Molar 14 und der gefrästen Prothesenbasis 12 kommt. Nach der Entfernung des vorspringenden Bereichs 40a liegt dann gemäß Fig. 7 ein freiliegender Bereich 40b vor, der sich bündig mit der umgebenden Prothesen-Basalseite 14 erstreckt.

Die Prothesenbasis 12 bietet seitlich des vorspringenden Bereichs 40a einen recht großen Stützbereich 42 für den jeweiligen Molar 14. Zusammen mit der demgegenüber schräg stehenden Fläche 22 bietet der Stützbereich 42 eine im Wesentlichen V-förmige Stützaufnahme, die durch den Bereich 40a unterbrochen ist.

Wie aus Fig. 6 ersichtlich ist, lässt sich der konfektionierte Molar 14 je störungsfrei in die betreffende Kavität 20 einsetzen. Zu diesem Zeitpunkt ist die Unterseite der Scheibe 28 unbearbeitet, und der Molar 14 wird je in bekannter Weise in der Kavität 20 eingeklebt, wobei der Bereich 40a wiederum frei von Klebstoff belassen wird.

Der konfektionierte Molar 14 weist eine Mastikalfläche 15 auf, die - wie nachstehend noch erläutert - ggf. noch nachgearbeitet werden kann.

Nach dem Aushärten des Klebstoffs, der sich über den gesamten Stützbereich 42 und die Seitenbereiche 22 und 24 erstreckt, erfolgt eine Bearbeitung etwaiger okklusaler Störkontakte der Molaren 14 an der Mastikalfläche 15. Es versteht sich, dass diese Bearbeitung lediglich bei Bedarf und an den Stellen erfolgt, an denen sie als notwendig angesehen wird.

Hieran anschließend wird erfindungsgemäß die Unterseite der Scheibe 28 dem Fräsvorgang unterzogen. Hierbei wird die Basalseite 18 der Prothesenbasis 12 vollständig gefräst, und auch die Basalfläche 16 jedes vorragenden Molars 14 im Bereich 40b bearbeitet, so dass sich eine bündige Oberfläche zur Prothesenbasalfläche 18 einstellt. Bei Bedarf wird diese in dem Bereich 40b - oder aber auch darüber hinaus gehend - noch mit einer elastischen oder aus Prothesenbasismaterial bestehenden Schutzschicht versehen. Es versteht sich, dass anstelle der anhand von Fig. 6 beschriebenen Bearbeitung von okklusalen Fehlkontakten die Bearbeitung auch erst jetzt erfolgen kann, beispielsweise wenn die fertige Prothese in eine Fräsmaschine eingesetzt ist und dann Fehlkontakte festgestellt werden.

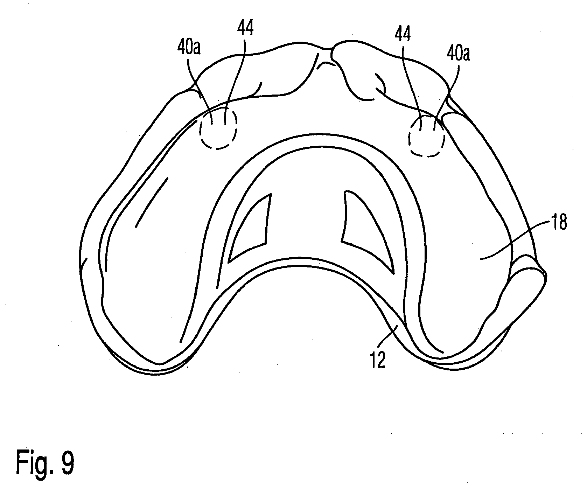

Aus Fig. 9 ist ersichtlich, in welcher Weise sich basale Vorsprünge oder freiliegenden Bereich 40b von der Basalseite 18 einer Prothesenbasis abzeichnen. In dem Beispielsfall ist je ein Eckzahn 44 betroffen, dessen Konfektionslänge auf Grund der Mundsituation des Patienten zu groß ist. Dennoch wird der ästhetisch passende und dem Zahngarnitur im Übrigen angehörende Zahn verwendet und basal in der entsprechend den vorstehenden Erläuterungen beschriebenen Weise eingekürzt, und zwar in einem Zuge bei der Bearbeitung der Basalseite 18 der Prothesenbasis 12.

### Bezugszeichenliste

- **10**: Prothese/n
- **12**: Prothesenbasis
- **14**: Zahn/Zähne; Molar/en
- **15**: Mastikalfläche
- **16**: Basalfläche
- **16b**: freiliegende Basalfläche
- **18**: Prothesenbasis-Basalfläche
- **20**: Kavität/en
- **22**: Aufnahmefläche
- **24**: Seitenflächen
- **26**: Oberseite
- **28**: Scheibe
- **30**: Kavitätenbasis
- **32**: Vertiefung
- **34**: Steg
- **40**: Bereich
- **40a**: vorspringender Bereich
- **40b**: freiliegender Bereich
- **42**: Stützbereich
- **44**: Eckzahn

## Patentansprüche

1. Prothese, aus Prothesenzähnen insbesondere konfektionierten Prothesenzähnen, und aus einer Prothesenbasis (12) aus einem fleischfarbenen Kunststoffmaterial, mit Kavitäten (20), in welchen Prothesenzähne (14) gelagert, insbesondere durch Kleben befestigt, sind, wobei die Prothesenbasis (12) durch ein CAD/CAM-Verfahren unter Bildung der Kavitäten (20) für die Zähne (14) hergestellt ist,
**dadurch gekennzeichnet, dass** die Basalseite (18) der Prothesenbasis (12) und eine Basalfläche (16) eines vorragenden, in einer Kavität (20) der Prothesenbasis (12) befestigten Prothesenzahns (14), in einem die Basalseite (18) der Prothesenbasis (12) durchtretenden zervikalen Bereich (40a) des Zahnes (14) in einem Fräsvorgang bearbeitbar sind, so dass eine bündige Oberfläche der Basalfläche (16) des mindestens einen Zahnes (14) zur Basalseite (18) der Prothesenbasis (12) realisierbar ist.

2. Prothese nach Anspruch 1, **dadurch gekennzeichnet, dass** die Zähne von der Mastikalfläche der Prothesenbasis (12) her ungekürzt in die Prothesenbasis-Kavitäten eingesetzt und in diesen verklebt sind.

3. Prothese nach Anspruch 1 oder Anspruch 2, **dadurch gekennzeichnet, dass** die Zähne (14), dergestalt gekürzt werden können, dass die Basalseite (18) der Prothesenbasis (12) mit der Zahn-Basalfläche (16) bündig ist.

4. Prothese nach einem der vorhergehenden Ansprüche, **dadurch gekennzeichnet, dass** mindestens ein Zahn (14) der Prothese (10) in der zugehörigen Prothesenbasis-Kavität (20) ausschließlich im zervikalen Umfangsbereich gehalten, insbesondere festgeklebt einpolymerisiert, eingeklipst oder eingeschraubt, ist und die Basalfläche (16) mindestens dieses einen Zahnes (14) freiliegt.

5. Prothese nach einem der vorhergehenden Ansprüche, **dadurch gekennzeichnet, dass** hinsichtlich der Kaufläche von Molaren und Prämolaren beziehungsweise der Schneidekante von Frontzähnen die Höhenlage jedes Zahns durch eine von der CAD/CAM-Software berechnete Position bestimmt ist, wobei ein konfektionierter Zahn (12) sich durch die Prothese hindurch erstreckt, wenn dies von der Höhenlage her vorgegeben ist.

6. Prothese nach einem der vorhergehenden Ansprüche, **dadurch gekennzeichnet, dass** jeder Zahn im Raum an der von der CAD/CAM-Software berechneten Position aufgestellt ist und die Kavitäten für die Zähne je passend für diese in der Prothesenbasis hergestellt sind.

7. Prothese nach einem der vorhergehenden Ansprüche, **dadurch gekennzeichnet, dass** der die Basalseite (18) der Prothesenbasis (12) durchtretende zervikale Bereich (40a) eines Prothesenzahns (14) an seiner Zahn-Basalfläche (16) zur Erzeugung des freiliegenden Bereichs (40b), der sich bündig mit der Basalseite (18) der Prothesenbasis (12) erstreckt, spanabhebend abfräsbar ist.

8. Prothese nach einem der vorhergehenden Ansprüche, **dadurch gekennzeichnet, dass** mindestens ein Zahn (14) die Prothese (10) mindestens teilweise durchdringt und in dem Bereich (40) der Durchdringung dem Verlauf der Basalseite (18) der Prothesenbasis (12) folgend abgeschliffen oder abgefräst ist.

9. Prothese nach einem der vorhergehenden Ansprüche, **dadurch gekennzeichnet, dass** die Kavitäten (20) für die Aufnahme der Zähne (14) von der Mastikalseite der Prothesenbasis (12) hinterschneidungsfrei ausgeformt sind, insbesondere durch CAD/CAM-Fräsen.

10. Prothese nach einem der Ansprüche 4 bis 9, **dadurch gekennzeichnet, dass** die Zahn-Basalflächen (16) mindestens teilweise an freiliegenden Bereichen (40b) mit einer Beschichtung, insbesondere einem Lack, versehen sind, der sich insbesondere mindestens teilweise von der Zahnbasalfläche (16) zur umgebenden Basalseite (18) der Prothesenbasis (12) erstreckt.

11. Prothese nach einem der vorhergehenden Ansprüche, **dadurch gekennzeichnet, dass** mindestens eine Kavität (20) für die Aufnahme eines Zahns (14) an der Kavitätenbasis (30) einen Überschuss-Aufnahmeraum (39) aufweist, in welchem in der Klebefuge zwischen Kavität (20) und Zahn (14) auftretender Klebstoffüberschuss aufnehmbar ist.

12. Verfahren zur Herstellung einer Prothese aus Zähnen, insbesondere konfektionierten Zähnen, und aus einem fleischfarbenem Kunststoffmaterial zur Ausbildung einer Prothesenbasis, in welcher Prothesenbasis die Zähne in Kavitäten (20) gelagert, insbesondere durch Kleben befestigt werden, wobei die Prothesenbasis aus dem fleischfarbenem Kunststoffmaterial durch ein CAD/CAM-Verfahren hergestellt wird, **dadurch gekennzeichnet, dass** mindestens ein Zahn (14) in einer die Prothesenbasis (12) durchtretenden Kavität (20) dergestalt eingesetzt ist, dass dieser die Basalseite (18) der Prothesenbasis (12) durchtritt, und
dass nach Befestigen des Zahns (14), insbesondere Kleben, in der Kavität (20), der die Basalseite (18) der Prothesenbasis (12) überragende zervikale Bereich (40) des Zahns (14) entfernt, insbesondere abgeschliffen oder abgefräst wird.

13. Verfahren nach Anspruch 12, **dadurch gekennzeichnet, dass** die Zähne mittels einer Transferschablone in die je vorbereitete Kavität (20) für die Aufnahme des betreffenden Zahns (14) eingebracht werden.

14. Verfahren nach Anspruch 12 oder 13, **dadurch gekennzeichnet, dass** konfektionierte Zähne in die Prothesenbasis (12), nach deren Fertigstellung mit vorgegebenen vestibulären und oralseitigen Flächen, in die Kavitäten (20) für die Zähne eingesetzt werden und dort befestigt, insbesondere verklebt, werden, auch wenn die Höhenlage der konfektionierten Zähne dann zu einem Durchdringen der Prothesenbasis (12) führt.

15. Verfahren nach einem der Ansprüche 12 bis 14, **dadurch gekennzeichnet, dass** die konfektionierten Zähne (14) an ggf. vorliegenden okklusalen Störkontakten bearbeitet, insbesondere abgeschliffen oder abgefräst werden, entweder vor dem Erstellen der Basalseite (18) der Prothesenbasis (12) oder nach dem Erstellen der Basalseite (18) der Prothesenbasis (12).

16. Verfahren nach einem der Ansprüche 12 bis 15, **dadurch gekennzeichnet, dass** nach dem Einkleben des Zahns (14) in die Kavität (20) der fertigen Prothesenbasis (12) der überstehende zervikale Bereich (40a) des Zahnes (14) entfernt, insbesondere manuell oder mittels CAD/CAM abgeschliffen oder abgefräst wird, und eine gegenüber der Basalseite (18) der Prothesenbasis (12) bündige Zahn-Basalfläche (16) erzeugt wird.

17. Verfahren zur Herstellung einer Prothese aus Zähnen, insbesondere konfektionierten Zähnen, und aus einem fleischfarbenen Kunststoffmaterial zur Ausbildung einer Prothesenbasis, in welcher Prothesenbasis die Zähne in Kavitäten gelagert, insbesondere durch Kleben befestigt sind, wobei die Prothesenbasis aus einem scheibenförmigen Rohling zunächst an der Mastikalseite der Prothese gefräst wird, insbesondere in einem CAD/CAM-Verfahren,
**dadurch gekennzeichnet, dass** dann mindestens ein Zahn (14) in eine Kavität (20) der Prothesenbasis (12) eingesetzt und dort gelagert, insbesondere eingeklebt, wird und dass dann in einem Fräsvorgang eine Basalfläche des mindestens einen Zahns (14) und die Basalseite (18) der Prothesenbasis (12), die der Mastikalseite (15) gegenüber liegt, bearbeitet werden, so dass sich eine bündige Oberfläche der Basalfläche des mindestens einen Zahns (14) zur Basalseite (18) der Prothesenbasis (12) einstellt.

18. Verfahren nach einem der Ansprüche 14 bis 16, **dadurch gekennzeichnet, dass** nach Abfräsen der vestibulären und oralseitigen Flächen der Prothesenbasis (12) konfektionierte Zähne in die vorgesehenen Kavitäten (20) eingebracht werden, dass die Zähne (14) dann unter Zuhilfenahme einer Transferschablone in den Kavitäten (20) positioniert und mittels Kleber verklebt werden, und dass danach die Basalseite (18) der Prothese (10), mindestens teilweise unter Freilegung der basalen Bereiche (40) der Prothesenzähne, an den Stellen, an denen es gegebenenfalls erforderlich ist, spanabhebend fertig bearbeitet wird, nachdem der Kleber in eine mindestens für die Bearbeitung ausreichende Festigkeit ausgehärtet ist.

## Claims

1. A prosthesis of denture prosthesis teeth, especially preformed denture prosthesis teeth, and of a prosthesis base (12) of a nude-colored plastic material, having cavities (20), into which denture prosthesis teeth (14) are embedded, and especially are adhesively bonded, wherein the prosthesis base (12) is fabricated by a CAD/CAM process to form the cavities (20) for the teeth (14),
**characterized in that** the basal side (18) of the prosthesis base (12) and a basal surface (16) of a protruding tooth (14) mounted in a cavity (20) of the prosthesis base (12), are able to be processed by milling operation in a tooth (14) cervical region (40a) passing through the basal side (18) of the prosthesis base (12), such that a flush surface of the basal surface (16) of the at least one tooth (14) is feasible so as to face the basal side (18) of the prosthesis base (12).

2. The prosthesis according to claim 1, **characterized in that** the teeth are inserted into and are bonded in the prosthesis base cavities from the masticatory surface side of the prosthesis base (12) In an untruncated manner.

3. The prosthesis according to claim1 or claim 2, **characterized in that** the teeth (14), may be truncated such that the basal side (18) of the prosthesis base (12) is flush with the dental basal surface (16).

4. The prosthesis according to one of the preceding claims, **characterized in that** at least one tooth (14) of the prosthesis (10) is retained, and especially is firmly adhered and polymerized, clipped or screwed Into the associated prosthesis base cavity (20) exclusively In the cervical circumferential region and the basal surface (16) of at least this individual tooth (14) is exposed.

5. The prosthesis according to one of the preceding claims, **characterized in that**, as to the chewing surface of molars and premolars or the incisor edge of frontal teeth, respectively, the altitude of each tooth is determined by a position calculated by the CAD/CAM software, wherein a preformed tooth (12) extends through the prosthesis if this Is specified according to the altitude.

6. The prosthesis according to one of the preceding claims, **characterized in that** each tooth is installable In space at the position calculated by the CAD/CAM software and each one of the cavities for the teeth is created in the prosthesis base to match the teeth.

7. The prosthesis according to one of the preceding claims, **characterized in that** the cervical region (40a) of a denture tooth (14) passing through the basal side (18) of the prosthesis base (12), on its dental basal surface (16), is able to be cuttingly machined for creating the exposed region (40b), which extends to be flush with the basal side (18) of the prosthesis base (12).

8. The prosthesis according to one of the preceding claims, **characterized in that** at least one tooth (14) at least partially passes through the prosthesis (10) and Is ground down or milled down in the passing through region (40) so as to follow the course of the basal side (18) of the prosthesis base (12).

9. The prosthesis according to one of the preceding claims, **characterized in that** the cavities (20) for the accommodation of the teeth (14) are formed from the masticatory side of the prosthesis base (12) so as to be free of undercut, especially by way of CAD/CAM milling.

10. The prosthesis according to one of the claims 4 to 9, **characterized in that** the basal dental surfaces (16) are at least partially provided by a coating in the exposed regions (40b), and especially are coated with a lacquer, which extends especially at least in part from the basal dental surface (16) to the surrounding basal side (18) of the prosthesis base (12).

11. The prosthesis according to one of the preceding claims, **characterized in that** at least one cavity (20) for the accommodation of a tooth (14), on the cavity base (30), has excess accommodating space (39), in which excess adhesive present in the adhesive joint between the cavity (20) and the tooth (14) is acceptable.

12. A process for the manufacture of a prosthesis of teeth, especially preformed teeth, and of a nude-colored plastic material for forming a prosthesis base, In which prosthesis base the teeth are embedded In cavities (20), and especially are adhesively bonded, wherein the prosthesis base is made of the nude-colored plastic material by a CAD/CAM process, **characterized In that** at least one tooth (14) Is Inserted into a cavity (20) passing through the prosthesis base (12), such that it passes through the basal side (18) of the prosthesis base (12), and
**In that** after fixing the tooth (14), especially after bonding, in the cavity (20), the cervical region (40) of the tooth (14) protruding from the basal side (18) of the prosthesis base (12) is removed, and especially is ground down or milled down.

13. The process according to claim 12, **characterized In that** the teeth are inserted by means of a transfer template into each one of the prepared cavity (20) for accommodating the respective tooth (14).

14. The process according to claim 12 or 13, **characterized in that** preformed teeth, after completion thereof, are inserted in the prosthesis base (12) with specified vestibular and oral side surfaces into the cavities (20) for the teeth and is fixed therein, especially adhesively bonded, even If the altitude of the preformed teeth then results in a perforation of the prosthesis base (12).

15. The process according to one of the claims 12 to 14, **characterized in that** the preformed teeth (14), at occlusal interferences that are eventually present, are processed, and especially are ground down or milled down, either before establishing the basal side (18) of the prosthesis base (12) or after establishing the basal side (18) or the prosthesis base (12).

16. The process according to one of the claims 12 to 15, **characterized in that**, following adhesively bonding the tooth (14) into the cavity (20) of the completed prosthesis base (12), the protruding cervical region (40a) of the tooth (14) is removed, especially manually, or is ground down or milled down by means of CAD/CAM, and **in that** a basal dental surface (16) is created flush with the basal side (18) of the prosthesis base (12).

17. A process for the manufacture of a prosthesis of teeth, especially preformed teeth, and of a nude-colored plastic material for forming a prosthesis base, in which prosthesis base the teeth are embedded In cavities, and are especially adhesively bonded, wherein the prosthesis base is milled from a disc-shaped blanc and is initially milled at the masticatory side of the prosthesis, especially in a CAD/CAM process,
**characterized In that** then at least one tooth (14) is inserted into a cavity (20) of the prosthesis base (12) and is embedded, especially adhesively bonded therein, and **In that** subsequently a basal surface of the at least one tooth (14) and the basal side (18) of the prosthesis base (12), opposite to the masticatory side (15), are processed in a milling procedure, such that a surface of the basal surface of the at least one tooth (14) flush to the disc-shaped basal side (18) of the prosthesis base (12) is being set.

18. The process according to one of the claims 14 to 16, **characterized In that** following milling down the vestibular and oral side surfaces of the prosthesis base (12) preformed teeth are Inserted Into the dedicated cavities (20), such that the teeth (14) are then positioned in the cavities (20) with the help of a transfer template and are adhesively bonded by way of adhesive, and **in that**, following this, the basal side (18) of the prosthesis (10), at least in part to expose the basal regions (40) of the prosthesis teeth, is end-machined at locations that are occasionally In need thereof, after setting the adhesive to a strength that is at least sufficient for processing.

## Revendications

1. Prothèse, en dents prothétiques, en particulier des dents prothétiques préfabriquées, et une base de prothèse (12) d'une matière plastique de couleur chair, avec des cavités (20), dans lesquelles des dents prothétiques (14) sont logées, en particulier fixées par collage, où la base de la prothèse (12) est fabriquée par un processus CFAO avec la formation de cavités (20) pour les dents (14),
**caractérisée en ce que** la face de base (18) de la base de la prothèse (12) et une surface de base (16) d'une dent prothétique (14) faisant saillie, fixée dans une cavité (20) de la base de la prothèse (12), sont modifiables par un processus de fraisage dans une zone cervicale (40a) de la dent (14) traversant la face de base (18) de la base de la prothèse (12), de sorte de pouvoir obtenir une surface affleurant la surface de la face de base (16) de la au moins une dent (14) par rapport à la face de base (18) de la base de la prothèse (12).

2. Prothèse selon la revendication 1, **caractérisé en ce que** les dents sont insérées intégralement dans les cavités de la base de la prothèse à partir de la face occlusale de la base de la prothèse (12) et sont collés dans celle-ci.

3. Prothèse selon la revendication 1 ou 2, **caractérisé en ce que** les dents (14), peuvent être réduites de telle sorte que la face de base (18) de la base de la prothèse (12) affleure la face de base de la dent (16).

4. Prothèse selon l'une des revendications précédentes, **caractérisée en ce qu'**au moins une dent (14) de la prothèse (10) est maintenue exclusivement dans la cavité (20) associée de la base de prothèse dans la zone périphérique cervicale de, en particulier collée, polymérisée, clipsée ou vissée et la face de base (16) de cette au moins une dent (14) est exposée.

5. Prothèse selon l'une des revendications précédentes, **caractérisé en ce qu'**en ce qui concerne la surface occlusale des molaires et prémolaires ou le bord incisif des dents antérieures, la position en hauteur de chaque dent est déterminée par rapport à une position calculée par le logiciel de CFAO, ou une dent préfabriquée (12) s'étend à travers la prothèse, si ceci est dicté par la position en hauteur.

6. Prothèse selon une des revendications précédentes, **caractérisée en ce que** chaque-dent est installée dans la pièce à la position calculée par le logiciel de CFAO est et une cavité adaptée pour chacune des dents est fabriquée dans la base de la prothèse.

7. Prothèse selon l'une des revendications précédentes, **caractérisée en ce que** la zone cervicale (40a) d'une dent prothétique (14) sur sa face de base de la dent (16) traversant la face de base (18) de la base de la prothèse (12) pour produire la zone exposée (40 b), qui s'étend affleurant la face de base (18) de la base de la prothèse (12), peut-être fraisée par enlèvement de copeaux.

8. Prothèse selon l'une des revendications précédentes, **caractérisée en ce qu'**au moins une dent (14) pénètre au moins partiellement dans la prothèse (10) et est poncée ou fraisée dans la zone (40) de la pénétration suivant le cours de la face de base (18) de la base de la prothèse (12).

9. Prothèse selon l'une des revendications précédentes, **caractérisée en ce que** les cavités (20) destinées à recevoir les dents (14) par la face occlusale de la base de prothèse (12) sont formées sans contre-dépouille notamment par fraisage CFAO.

10. Prothèse selon l'une des revendications 4 à 9, **caractérisée en ce que** les surfaces de base de dent (16) sont au moins partiellement recouverte sur les zones exposées (40 b) d'un revêtement, en particulier un peinture, qui s'étend en particulier, au moins partiellement, de la surface de base des dents (16) à la face de base environnante (18) de la base de la prothèse (12).

11. Prothèse selon l'une des revendications précédentes, **caractérisé en ce qu'**au moins une cavité (20) destinée à recevoir une dent (14) présente sur la base de la cavité (30) un espace de réception d'un excédent (39), dans lequel tout excédent de colle est recevable dans le joint de colle entre la cavité (20) et la dent (14).

12. Procédé de fabrication d'une prothèse constituée de dents, en particulier en dents préfabriquées et une matière plastique de couleur chair pour former une base de prothèse, dans laquelle base de prothèse des dents sont logées dans des cavités (20), en particulier fixées par collage, où la base de la prothèse est fabriquée en matière plastique de couleur chair par un processus CFAO, **caractérisé en ce qu'**au moins une dent (14) est insérée dans une cavité transperçant la base de la prothèse (12) de telle sorte qui celle-ci transperce la surface de base (13) de la base de la prothèse (12) et
qu'après la fixation de la dent (14), en particulier par collage dans la cavité (20), la zone cervicale (40) de la dent (14) en saillie par rapport à la face de base (18) de la base de la prothèse (12) est enlevée, en particulier par ponçage ou fraisage.

13. Procédé selon la revendication 12, **caractérisé en ce que** chaque dent est insérée dans la cavité préparée (20) pour recevoir la dent concernée (14) au moyen d'un gabarit de transfert.

14. Procédé selon la revendication 12 ou 13, **caractérisé en ce que** des dents préfabriquées sont insérées après leur fabrication dans la base de la prothèse (12) dans les cavités (20) pour les dents avec des surfaces vestibulaires et orales prédéfinies et y sont fixées en particulier collées, même si la position en hauteur des dents préfabriquées résulte en une pénétration de la base de la prothèse (12).

15. Procédé selon l'une des revendications 12 à 14, **caractérisé en ce que** les dents préfabriquées (14) sont modifiées, en particulier polies ou blanchies sur des contacts perturbateurs occlusaux éventuellement présents, soit avant la création de la face de base (18) de la base de la prothèse dentaire (12) soit après la création de la face de base (18) de la base de la prothèse dentaire (12).

16. Procédé selon l'une des revendications 12 à 15, **caractérisé en ce qu'**après le collage de la dent (14) dans la cavité (20) de la base de prothèse dentaire (12) la zone cervicale (40a) de la dent (14) faisant saillie est enlevée, en particulier poncée ou fraisée manuellement ou au moyen de CFAO, et une surface de base de dent (16) affleurant la face de base (18) de la base de prothèse (12) est générée.

17. Procédé de fabrication d'une prothèse constituée de dents, en particulier de dents préfabriquées, et en matière plastique de couleur chair pour former une base de prothèse, dans laquelle base de prothèse des dents sont logées dans des cavités (20), en particulier fixées par collage, où la base de la prothèse est fraisée à partir d'un lingotin en forme de disque d'abord sur la face occlusale de la prothèse, surtout dans un procédé CFAO,
**caractérisé en ce qu'**à continuation au moins une dent (14) est Insérée dans une cavité (20) de la base de prothèse (12) et y est logée, en particulier collée et qu'ensuite dans une opération de fraisage une surface de base d'au moins une dent (14) et la face de base (18) de la base de la prothèse (12), en face de la face occlusale (15) sont modifiées, de sorte de créer une surface affleurant la face de base d'au moins une dent (14) par rapport à la face de base (18) de la base de la prothèse (12).

18. Procédé selon l'une des revendications 14 au 16, **caractérisée en ce qu'**après le fraisage des surfaces du côté vestibulaire et oral de la base de la prothèse (12), des dents préfabriquées sont introduites dans les cavités (20) prévues, que les dents (14) sont positionnées ensuite à l'aide d'un gabarit de transfert dans les cavités (20) et collées à l'aide d'un adhésif, et que par la suite la face de base (18) de la prothèse (10) est fini au moins partiellement par l'enlèvement de copeaux aux endroits où il peut être nécessaire, en exposant les zones de base (40) des dents de la prothèse, après que la colle ait atteint un niveau de durcissement suffisant pour la façonnage.
